# EUROPÄISCHE PATENTSCHRIFT

(11) **EP 1 510 094 B1**
(45) Veröffentlichungstag und Bekanntmachung des Hinweises auf die Patenterteilung: **19.04.2006**
(21) Anmeldenummer: 03756949.8
(22) Anmeldetag: 21.05.2003
(51) Int. Cl.: H04Q 7/32

(54) **NUTZUNG EINES SUBSCRIBER IDENTITY MODULS DURCH MEHRERE MOBILE KOMMUNIKATIONSGERÄTE**
USE OF A SUBSCRIBER IDENTITY MODULE BY SEVERAL MOBILE COMMUNICATION DEVICES
UTILISATION D'UN MODULE D'IDENTIFICATION D'ABONNE PAR PLUSIEURS APPAREILS DE COMMUNICATION MOBILES

(30) Priorität: 05.06.2002 DE 10225457
(43) Veröffentlichungstag der Anmeldung: 02.03.2005
(73) Patentinhaber: SIEMENS AKTIENGESELLSCHAFT, 80333 München (DE)
(72) Erfinder: MAJEWSKI, Frank, 10589 Berlin (DE); MORICH, Rolf, 12167 Berlin (DE)
(86) Internationale Anmeldenummer: PCT/DE2003/001688
(87) Internationale Veröffentlichungsnummer: WO 2003/105508

(56) Entgegenhaltungen:
- EP-A- 0 669 774
- WO-A-01/43460
- WO-A-02/067610
- US-A- 5 887 266
- US-A- 6 141 564

## Beschreibung

Die vorliegende Erfindung betrifft ein Verfahren zur Realisierung eines Zugriffs eines ersten mobilen Kommunikationsgeräts (Mobile Equipment ME) auf ein Subscriber Identity Modul (SIM) oder Universal Subscriber Identity Modul (USIM) eines zweiten mobilen Kommunikationsgeräts (ME). Bei dem mobilen Kommunikationsgerät kann es sich dabei beispielsweise um ein Mobile Phone, ein Autotelefon, ein Modem, ein Funkmodem oder ein Wireless Modul handeln.

Aus der US-A-6 141 564 ist bekannt, dass zwei autonome Kommunikationsmodule ("Master-Komponenten"), die jeweils für eine Kommunikation in einem separaten Netzwerk vorgesehen sind, auf eine einzige SIM-Karte zugreifen. Die beiden Kommunikationsmodule sind in einem Multi-Modus-Telefon integriert.

Aus der US-A-5 887 266 ist bekannt, dass ein mobiles Kommunikationsgerät über eine logische AT-Kommando-basierte Schnittstelle auf ein Applikationsmodul zugreift.

Auf einer SIM-Karte eines mobilen Kommunikationsgeräts werden Daten für die Authentifizierung in GSM, GPRS oder UMTS-Mobilfunknetzen und andere benutzerbezogene Informationen gespeichert. Zudem werden über die SIM die von einem mobilen Kommunikationsgerät genutzten Netzressourcen einem Nutzer und damit einem Konto zugeordnet.

Eine SIM-Karte besteht aus einem Prozessor, der unter anderem über einen Algorithmus für eine sichere Authentifizierung im Netz sorgt. Dieser Prozessor befindet sich auf einer Karte, einer so genannten Smart Card, die in ein SIM-Kartenlesegerät eingebracht wird. Dieses Lesegerät ist wiederum in einem mobilen Kommunikationsnetz integriert.

Das bedeutet, dass jedes mobile Kommunikationsgerät, dass sich in einem GSM/UMTS-Mobilfunknetz anmelden und authentifizieren will, über eine SIM verfügen muss. Da aber das zu i-dentifizierende Konto einem Nutzer zugeordnet ist, ist die Verwendung mehrerer mobiler Kommunikationsgeräte durch einen Nutzer nur durch eine buchhalterische Zuordnung unterschiedlicher logischer Nutzer, d.h. unterschiedlicher mobiler Kommunikationsgeräte, auf ein Konto möglich, beispielsweise mittels einer "Twin Card" von D1.

Bislang ist es nicht möglich, dass sich ein Nutzer mit unterschiedlichen mobilen Kommunikationsgeräten über eine Identität, d.h. mittels einer SIM, in einem GSM-Mobilfunknetz anmeldet.

Mit der Erweiterung der möglichen mobilen Dienste, die mit einem mobilen Kommunikationsgerät genutzt werden können, steigen die Anforderungen an die mobilen Kommunikationsgeräte erheblich. Daraus folgt, dass ein Nutzer verschiedene mobile Dienste über mehrere auf den jeweiligen Dienst spezialisierte mobile Kommunikationsgeräte nutzt.

Um dem Nutzer den Zugang über verschiedene mobile Kommunikationsgeräte zum GSM/UMTS-Mobilfunknetz zu ermöglichen, ist es notwendig, dass sich der Nutzer über jedes mobile Kommunikationsgerät bei dem GSM/UMTS-Mobilfunknetz anmelden kann.

Eine Aufgabe der vorliegenden Erfindung ist es, ein Verfahren und eine Anordnung von mobilen Kommunikationsgeräten zur Verfügung zu stellen, mit deren Hilfe ein Nutzer unter Nutzung mehrerer mobiler Kommunikationsgeräte sich möglichst schnell und einfach in einem GSM/UMTS-Mobilfunknetz anmelden kann.

Gelöst wird diese Aufgabe durch ein erfindungsgemäßes Verfahren nach Anspruch 1 bzw. durch eine erfindungsgemäße Anordnung gemäß Anspruch 5. Vorteilhafte Ausgestaltungen sind in den entsprechenden Unteransprüchen aufgezeigt.

Gemäß Anspruch 1 wird erfindungsgemäß ein Verfahren zur Realisierung eines externen Zugriffs eines ersten mobilen Kommunikationsgeräts (ME) auf ein Subscriber Identity Modul (SIM) eines zweiten mobilen Kommunikationsgeräts (ME) bereit gestellt, wobei eine logische Schnittstelle zwischen dem ersten und dem zweiten mobilen Kommunikationsgerät definiert wird, über die eine logische autonome Kommunikation zwischen dem ersten und dem zweiten mobilen Kommunikationsgerät ermöglicht wird.

Bisher musste in jedem mobilen Kommunikationsgerät eine SIM zur Identifikation eines Nutzer bzw. Subscribers integriert sein. Die SIM ist Bestandteil eines mobilen Kommunikationsgerätes. Um mehrere SIM-Karten, d.h. im Prinzip mehrere mobile Kommunikationsgeräte einem Nutzer bzw. dessen Konto zuzuordnen, gibt es von einigen Mobilfunkanbietern sogenannte Twin-Cards. Mittels dieser Karten werden beispielsweise zwei mobile Kommunikationsgeräte eines Nutzers zusammen abgerechnet.

Diese Lösung hat jedoch Nachteile. Da zwei mobile Kommunikationsgeräte mit eigenen SIM-Karten über nur eine Telefonnummer angesprochen werden, ist dem entsprechenden Netzwerk nicht bekannt, an welchem Gerät ankommende Anrufe signalisiert werden sollen. Es erfordert zusätzlichen Koordinationsaufwand durch Netzwerk oder Anwender, das aktive Kommunikationsgerät zu erkennen, z.B. Verwendung des zuletzt im Netzwerk eingebuchten mobilen Kommunikationsgerätes.

Es besteht keine Möglichkeit für eine automatische Umschaltung zwischen den mobilen Kommunikationsgeräten.

Zudem ist es einem Nutzer nicht möglich von einem mobilen Kommunikationsgerät auf die SIM eines anderen mobilen Kommunikationsgerät zuzugreifen. Damit stehen ihm Dienste wie Telefonbuch beispielsweise nur über das mobile Kommunikationsgerät zur Verfügung, das unmittelbar mit dem SIM-Kartenleser verbunden ist.

Ferner ist es auch nachteilig, dass in jedes mobile Kommunikationsgerät eine eigene SIM mit Kartenleser vorzusehen ist. Das ist recht kostenaufwendig.

Durch die vorliegende Erfindung wird nun ein Verfahren bereit gestellt, mit dessen Hilfe ein Zugriff eines mobilen Kommunikationsgerät auf das Subscriber Identity Module (SIM) eines anderen mobilen Kommunikationsgerätes möglich wird. Der Zugriff erfolgt dabei über eine externe logische Schnittstelle. Steht einem mobilen Kommunikationsgerät keine SIM zur Verfügung, so ermöglicht die vorliegende Erfindung über eine erfindungsgemäße definierte logische Schnittstelle auf die Daten der SIM-Karte eines anderen mobilen Kommunikationsgerätes zuzugreifen.

In einer bevorzugten Ausführungsform des erfindungsgemäßen Verfahrens wird in dem ersten und dem zweiten mobilen Kommunikationsgerät je eine Adaptionsschicht vorgesehen, die eine logische Kommunikation zwischen dem ersten und dem zweiten mobilen Kommunikationsgerät auf die logische Schnittstelle adaptiert. Das bedeutet, dass ein SIM Service Manager vorgesehen wird, der den Zugriff auf die externe SIM kontrolliert.

Ferner wird als logische Schnittstelle vorzugsweise eine AT-Kommando-basierte Schnittstelle definiert. Die logische Kommunikation ist unabhängig von der darunter liegenden Übertragungstechnologie.

In einer weiteren bevorzugten Ausführungsform des erfindungsgemäßen Verfahrens verwendet die logische Schnittstelle eine Client/Server-Architektur. Die erfindungsgemäß vorgesehene Adaptionsschicht ist Bestandteil des bereits erwähnten SIM Service Managers. Die Adaptionsschicht adaptiert die logische Kommunikation zwischen einem Client und einem Server auf die logische, vorzugsweise AT-Kommando-basierte Schnittstelle. Das mobile Kommunikationsgerät ohne SIM übernimmt dabei die Rolle des Client, wogegen das mobile Kommunikationsgerät mit SIM den Dienst "SIM Service" zur Verfügung stellt und so die Rolle des Servers einnimmt. Der Server, bzw. genauer gesagt der SIM Access Server, erlaubt einem anderen mobilen Kommunikationsgerät Zugriff auf die Daten einer SIM-Karte über eine externe logische Schnittstelle. Bei dem Server kann es sich dabei beispielsweise um ein Mobiltelefon handeln, das über eine integrierte SIM-Karte verfügt. Über eine Funk- oder Kabelverbindung kann das Mobiltelefon als Server anderen mobilen Kommunikationsgeräten ermöglichen, auf seine SIM-Karte zuzugreifen.

Der Client, bzw. genauer der SIM Access Client verwendet über eine Geräteverbindung mit einem Server über eine externe logische Schnittstelle dessen SIM-Karte. Bei dem SIM Access Client kann es sich beispielsweise um ein GSM/GPRS-Modul handeln, das in ein Automobil montiert ist. Diese Modul soll beispielsweise die Kommunikation über ein Mobilfunknetz an die spezielle Umgebung anpassen.

Von dem Client wird beispielsweise eine Anfrage, ein sogenannter Request an den Server gestellt. Dies erfolgt vorzugsweise durch Versenden des Requests als AT-Kommando über eine externe AT-Kommando-basierte Schnittstelle an den Server. Der Server antwortet mit einer Information Response, die ebenfalls vorzugsweise als AT-Kommando zum Client gesendet wird. Der Server kann Ereignisse auch ohne vorherige Aufforderung durch den Client über sogenannte Unsolicited Result Codes (URC) melden.

Ein großer Vorteil der vorliegenden Erfindung liegt in der Nutzung einer AT-Kommando-Schnittstelle zur Realisierung eines externen Zugriffs auf eine SIM, d.h. um ein SIM-Sharing zu ermöglichen. Dabei stellt ein mobiles Kommunikationsgerät, das dann als Server fungiert, einem anderen mobilen Kommunikationsgerät, das dann ein Client ist und einen Dienst nutzen möchte, eine SIM zur Verfügung, mittels derer der Dienst nutzbar wird.

In einer weiteren bevorzugten Ausführungsform des erfindungsgemäßen Verfahrens verwendet die logische Schnittstelle als Übertragungstechnologie RS-232, USB, Bluetooth, Wireless-LAN (WLAN) oder Ultra-Wide-Band (UWB).

Durch die Unabhängigkeit der logischen Schnittstelle von der Übertragungstechnologie ergibt sich beispielhaft der Vorteil, dass das SIM-Sharing leicht auf unterschiedliche Anwendungsfälle übertragen werden kann.

Ferner betrifft die vorliegende Erfindung eine entsprechende Anordnung von mindestens einem ersten und einem zweiten mobilen Kommunikationsgerät (ME), wobei eine logische Schnittstelle definiert ist, über die das erste mobile Kommunikationsgerät Zugriff auf ein SIM des zweiten mobilen Kommunikationsgerät hat.

Vorzugsweise ist dabei, wie bereits erläutert, die logische Schnittstelle eine AT-Kommando-basierte Schnittstelle.

In einer bevorzugten Ausführungsform der erfindungsgemäßen Anordnung ist in dem ersten und dem zweiten mobilen Kommunikationsgerät je eine Adaptionsschicht, die eine logische Kommunikation zwischen dem ersten und dem zweiten mobilen Kommunikationsgerät auf die logische Schnittstelle adaptiert.

Vorzugsweise kann die logische Schnittstelle als Übertragungstechnologie RS-232, USB, Bluetooth, Wireless-LAN (WLAN) oder Ultra-Wide-Band (UWB) verwenden.

Weitere Vorteile der vorliegenden Erfindung sollen anhand der folgenden Figur näher erläutert werden.

Es zeigt:

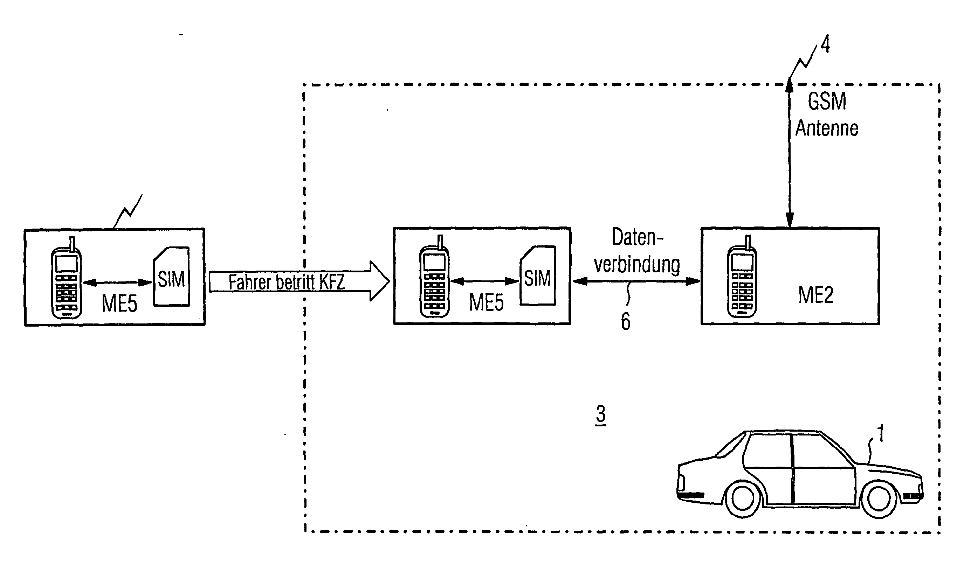

Fig.1 schematische Darstellung einer Ausführungsform des Ablaufs des erfindungsgemäßen Verfahrens.

In Figur 1 ist eine mögliche Anwendung des erfindungsgemäßen Verfahrens in einem Kraftfahrzeug 1 dargestellt. In dem Kraftfahrzeug (KFZ) 1 befindet sich ein fest installiertes mobiles Kommunikationsgerät ME 2 in Form eines GSM/GPRS-Kommunikationsmoduls, das auf die Anforderungen u.a. bzgl. Vibrations- und Temperaturfestigkeit auf die Umgebung optimiert ist. Aufgaben des ME 2 bestehen u.a. beispielsweise in Unfall-Notruf, Übermittlung von Navigationsdaten, Zugriff auf Kfz-Daten für Servicezwecke und Telemetrie.

Das fest installierte ME 2 stellt über seine außerhalb der Fahrgastzelle 3 angeordnete Antenne 4 den drahtlosen Zugriff auf das Mobilfunknetz bereit. Das ME 2 verfügt aber nicht über eine eigene SIM-Karte und ist daher als Client konfiguriert. Kommt nun ein Nutzer mit einem mobilen Telefon ME 5 in die Fahrgastzelle 3, so kann er das ME 5 in eine dafür vorgesehene Einrichtung 6 stecken. Diese Einrichtung bietet eine Datenverbindung, beispielsweise ein serielles Datenkabel, zu dem eingebauten GSM/GPRS-Modul ME 2. Das ME 5 ist als Server konfiguriert und stellt dem eingebauten ME 2 seine SIM zur Verfügung. Damit übernimmt das ME 2 die Kommunikation zum Mobilfunknetz, nachdem das ME 5 sein GSM/GPRS-Air-Interface abgeschaltet hat. Somit erhält der Nutzer ein auf diese Umgebung optimiertes Kommunikationssystem.

## Patentansprüche

1. Verfahren zur Realisierung eines externen Zugriffs eines ersten mobilen Kommunikationsgeräts (ME2) auf ein Subscriber Identity Modul (SIM) eines zweiten mobilen Kommunikationsgeräts (MES),
**dadurch gekennzeichnet, dass**
eine logische AT-Kommando-basierte Schnittstelle zwischen dem ersten und dem zweiten mobilen Kommunikationsgerät (ME2, ME5) definiert wird, über die der Zugriff des ersten mobilen Kommunikationsgeräts (ME2) auf das Subscriber Identity Modul (SIM) des zweiten mobilen Kommunikationsgeräts (ME5) ermöglicht wird.

2. Verfahren nach Anspruch 1,
**dadurch gekennzeichnet,**
**dass** in dem ersten und dem zweiten mobilen Kommunikationsgerät (ME2, ME5) je eine Adaptionsschicht vorgesehen wird, die eine logische Kommunikation zwischen dem ersten und dem zweiten mobilen Kommunikationsgerät (ME2, ME5) auf die logische AT-Kommando-basierte Schnittstelle adaptiert.

3. Verfahren nach einem der vorhergehenden Ansprüche,
**dadurch gekennzeichnet,**
**dass** die logische AT-Kommando-basierte Schnittstelle eine Client/Server-Architektur verwendet.

4. Verfahren nach einem der vorhergehenden Ansprüche,
**dadurch gekennzeichnet,**
**dass** die logische AT-Kommando-basierte Schnittstelle unabhängig von einer verwendeten Übertragungstechnologie verwendet wird, wobei RS-232, USB, Bluetooth, Wireless-LAN (WLAN) oder Ultra-Wide-Band (UWB) eingesetzt werden.

5. Anordnung von mindestens einem ersten und einem zweiten mobilen Kommunikationsgerät (ME2, ME5), wobei eine logische AT-Kommando-basierte Schnittstelle definiert ist, über die das erste mobile Kommunikationsgerät (ME2) Zugriff auf ein SIM des zweiten mobilen Kommunikationsgeräts (ME5) hat.

6. Anordnung nach Anspruch 5,
**dadurch gekennzeichnet,**
**dass** in dem ersten und dem zweiten mobilen Kommunikationsgerät (ME2, ME5) je eine Adaptionsschicht existiert, die eine logische Kommunikation zwischen dem ersten und dem zweiten mobilen Kommunikationsgerät (ME2, ME5) auf die logische AT-Kommando-basierte Schnittstelle adaptiert.

7. Anordnung nach einem der Ansprüche 5 oder 6,
**dadurch gekennzeichnet,**
**dass** die logische AT-Kommando-basierte Schnittstelle als Übertragungstechnologie RS-232, USB, Bluetooth, Wireless-LAN (WLAN) oder Ultra-Wide-Band (UWB) verwendet.

8. Anordnung nach einem der Ansprüche 5 bis 7,
**dadurch gekennzeichnet,**
**dass** in dem ersten mobilen Kommunikationsgerät (ME2) kein SIM eingesetzt ist.

## Claims

1. Method for implementing external access by a first mobile communication appliance (ME2) to a subscriber identity module (SIM) in a second mobile communication appliance (ME5),
**characterized**
**in that** a logical AT-command-based interface between the first and second mobile communication appliances (ME2, ME5) is defined which permits access by the first mobile communication appliance (ME2) to the subscriber identity module (SIM) of the second mobile communication appliance (ME5).

2. Method according to Claim 1,
**characterized**
**in that** the first and second mobile communication appliances (ME2, ME5) contain a respective adaptation layer which adapts logical communication between the first and second mobile communication appliances (ME2, ME5) to the logical AT-command-based interface.

3. Method according to one of the preceding claims,
**characterized**
**in that** the logical AT-command-based interface uses a client/server architecture.

4. Method according to one of the preceding claims,
**characterized**
**in that** the logical AT-command-based interface is used independently of a transmission technology which is being used, with RS-232, USB, Bluetooth, Wireless-LAN (WLAN) or Ultra-Wide-Band (UWB) being used.

5. Arrangement comprising at least one first and a second mobile communication appliance (ME2, ME5), where a logical AT-command-based interface is defined which provides the first mobile communication appliance (ME2) with access to a SIM in the second mobile communication appliance (ME5).

6. Arrangement according to Claim 5,
**characterized**
**in that** the first and second mobile communication appliances (ME2, ME5) contain a respective adaptation layer which adapts logical communication between the first and second mobile communication appliances (ME2, ME5) to the logical AT-command-based interface.

7. Arrangement according to either of Claims 5 and 6,
**characterized**
**in that** the logical AT-command-based interface uses RS-232, USB, Bluetooth, Wireless-LAN (WLAN) or Ultra-Wide-Band (UWB) as transmission technology.

8. Arrangement according to one of Claims 5 to 7,
**characterized**
**in that** no SIM is used in the first mobile communication appliance (ME2).

## Revendications

1. Procédé pour réaliser un accès externe d'un premier appareil de communication mobile (ME2) à un module d'identification d'abonné (SIM = Subscriber Identity Modul) d'un deuxième appareil de communication mobile (ME5),
**caractérisé par le fait qu'**on définit une interface logique basée sur des commandes AT entre le premier et le deuxième appareil de communication mobile (ME2, ME5), interface par l'intermédiaire de laquelle l'accès du premier appareil de communication mobile (ME2) au module d'identification d'abonné (SIM) du deuxième appareil de communication mobile (ME5) est permis.

2. Procédé selon la revendication 1,
**caractérisé par le fait qu'**on prévoit dans le premier et le deuxième appareil de communication mobile (ME2, ME5) à chaque fois une couche d'adaptation qui adapte une communication logique entre le premier et le deuxième appareil de communication mobile (ME2, ME5) à l'interface logique basée sur des commandes AT.

3. Procédé selon l'une des revendications précédentes,
**caractérisé par le fait que** l'interface logique basée sur des commandes AT utilise une architecture client / serveur.

4. Procédé selon l'une des revendications précédentes,
**caractérisé par le fait que** l'interface logique basée sur des commandes AT est utilisée indépendamment d'une technique de transmission utilisée, l'une des techniques de transmission RS-232, USB, Bluetooth, Wireless-LAN (WLAN) ou Ultra-Wide-Band (UWB) étant utilisée.

5. Agencement d'au moins un premier et un deuxième appareil de communication mobile (ME2, ME5), une interface logique basée sur des commandes AT étant définie, interface par l'intermédiaire de laquelle le premier appareil de communication mobile (ME2) a accès à un module d'identification d'abonné (SIM) du deuxième appareil de communication mobile (ME5).

6. Agencement selon la revendication 5,
**caractérisé par le fait qu'**il existe dans le premier et le deuxième appareil de communication mobile (ME2, ME5) à chaque fois une couche d'adaptation qui adapte une communication logique entre le premier et le deuxième appareil de communication mobile (ME2, ME5) à l'interface logique basée sur des commandes AT.

7. Agencement selon l'une des revendications 5 ou 6,
**caractérisé par le fait que** l'interface logique basée sur des commandes AT utilise comme technique de transmission RS-232, USB, Bluetooth, Wireless-LAN (WLAN) ou Ultra-Wide-Band (UWB).

8. Agencement selon l'une des revendications 5 à 7,
**caractérisé par le fait qu'**aucun module d'identification d'abonné (SIM) n'est utilisé dans le premier appareil de communication mobile (ME2).
